# EUROPEAN PATENT SPECIFICATION

(11) **EP 1 807 457 B1**
(45) Date of publication and mention of the grant of the patent: **17.09.2014**
(21) Application number: 05809067.1
(22) Date of filing: 15.10.2005
(51) Int. Cl.: C08F 14/06, C08F 114/06, C08K 9/08

(54) **VINYL CHLORIDE RESIN COMPOSITION AND METHOD FOR PREPARATION THEREOF**
VINYLCHLORIDHARZZUSAMMENSETZUNG UND HERSTELLUNGSVERFAHREN DAFÜR
COMPOSITION DE RESINE DE CHLORURE DE VINYLE ET SA METHODE DE PREPARATION

(30) Priority: 03.11.2004 KR 20040088772
(43) Date of publication of application: 18.07.2007
(73) Proprietor: LG Chem, Ltd., Youngdungpo-gu, Seoul 150-721 (KR)
(72) Inventor: KIM, Youngjin, Daejeon-city 305-762 (KR); KIM, Bhomri, Yuseong-gu, Daejeon-city 305-340 (KR); SEO, Chayeon, Doryong-dong, Yuseong-gu, Daejeon-city 305-340 (KR); KOH, Jeong-Hwan, Yuseong-gu, Daejeon-city 305-727 (KR)
(74) Representative: Goddar, Heinz J.
(86) International application number: PCT/KR2005/003450
(87) International publication number: WO 2006/049392

(56) References cited:
- WO-A-02/20646
- WO-A-2004/074357
- WO-A-2005/047382
- WO-A-2006/019008
- US-A- 4 345 043
- US-A- 5 641 845
- US-A- 5 747 617
- US-A1- 2002 061 973
- US-B1- 6 632 897

## Description

### Technical Field

The present invention relates to a vinyl chloride resin composition and a method of preparing the same, and more particularly, to a vinyl chloride resin composition which can be used in exterior construction materials due to markedly improved thermal stability and weather resistance, which are considered weaknesses of vinyl chloride resins, and a method of preparing the same.

### Background Art

Thermal stability is a known weakness of vinyl chloride resins. Until now, a number of methods for preparing vinyl chloride resins with improved thermal stability have been suggested. However, these methods are limited in the improvements in fundamental properties provided to the resins.

Structural defects of allylic chlorine, tertiary chlorine, in a vinyl chloride polymer, which result from a dehydrochlorination reaction during polymerization, deteriorate the thermal stability of the vinyl chloride resin. The bonding energy between carbon and chlorine in this case is very low compared to the bonding energy between carbon and chlorine in normal structures. Further, the chain transfer breaks the bond between carbon and chlorine, and the site of broken bond becomes a polymerization activation point, which causes the deterioration of the thermal stability of the vinyl chloride resin. The vinyl chloride resin undergoes a dehydrochlorination reaction caused by the heat or ultraviolet radiation applied during processing, and this reaction causes discoloration of the resin, or deterioration or alteration of the resin properties.

To solve this problem during processing, there has been an attempt to inhibit the generation of radicals or ions upon thermal degradation of a vinyl chloride resin and to control the rate of thermal degradation of the resin by adding an organometallic compound containing a metal such as Ba, Zn, Ca or Pb to a prepared vinyl chloride resin. Recently, methods of using thermal stabilizers of various forms, such as metal-based stabilizers or organic compound-based stabilizers, have also been introduced. However, the environmental problems brought upon by using heavy metal stabilizers and the high prices thereof restrict the use of such stabilizers.

Vinyl chloride resins have excellent mechanical strength and chemical resistance, and thus, they are widely used as industrial and domestic materials in pipes, window frames, sheets, films. However, molding products made of vinyl chloride resins for rigid use are poor in thermal stability and weather resistance. Thus, despite their excellent performance compared with other resins of similar prices, vinyl chloride cannot be applied to applications requiring special functions.

As a solution to such problem, Japanese Laid-open Patent Publication No. 2002-332308 discloses a method of mixing a small amount of a polyvinyl alcohol-based dispersant with an anhydrous powder of a vinyl chloride polymer resin. However, since this method does not differ from conventionally known preparation methods of polymerization, this method barely improves the thermal stability and weather resistance of the resin, and expected effects of such improvement are not many.

WO 2005/047382 A1 discloses a polyvinylchloride nano-composite comprising a polyvinylchloride polymer and surface-modified nano calcium carbonate particles.

US 6,632,897 B1 discloses surface-modified metal oxide particles not specifying in detail the type of surface-modification.

Furthermore, to improve weather resistance, a technique for processing vinyl chloride resins in which a large amount of metal oxide such as titanium dioxide is introduced when processing the resin has been used.

However, the conventional methods cannot be used to improve thermal stability and weather resistance at the same time, and thus research into a method for preparing a vinyl chloride resin which can improve both the thermal stability and weather resistance of a resin is still required.

### Disclosure of Invention

### Technical Problem

In order to solve the above-described problems of the prior art, the present invention provides a vinyl chloride resin composition which has remarkably improved thermal stability and weather resistance, which are considered weaknesses of vinyl chloride resins, and thus can be used as an exterior construction material for, for example, siding, a window frame, fences or the like, and a method of preparing the same.

According to an aspect of the present invention, there is provided a vinyl chloride resin composition according to claim 1.

According to another aspect of the present invention, there is provided a method of preparing a vinyl chloride resin according to claim 7.

### Description of Drawings

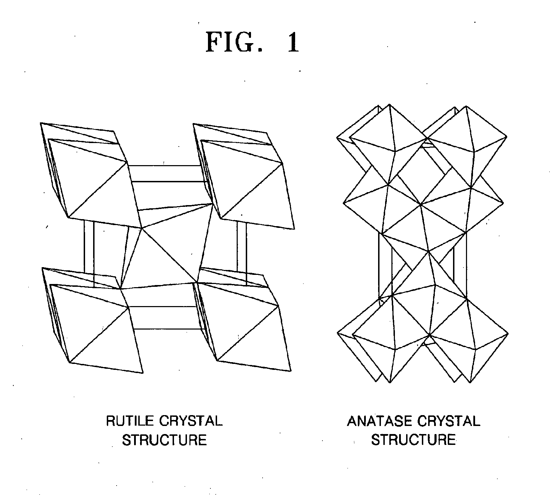

FIG. 1 is a diagram conceptually illustrating the rutile structure and anatase structure of titanium dioxide, which is an exemplary metal oxide used in a vinyl chloride resin composition according to an embodiment of the present invention.

### Best Mode

A vinyl chloride resin composition according to an embodiment of the present invention includes 100 parts by weight of a vinyl chloride polymer resin and 0.1 to 30 parts by weight of an organo-modified metal oxide nanoparticle.

The vinyl chloride polymer resin used in the present invention can be prepared using monomers conventionally used in vinyl chloride resins which optionally further include vinyl acetate, acrylates, methacrylates, olefins (ethylene, propylene), unsaturated fatty acids (acrylic acid, methacrylic acid, itaconic acid, maleic acid) and anhydrides of the unsaturated fatty acids.

The amount of the organo-modified metal oxide nanoparticle may be in the range of 0.1 to 30 parts by weight based on 100 parts by weight of the vinyl chloride polymer resin. When the amount is less than 0.1 parts by weight, the thermal stability of the vinyl chloride resin composition becomes poor, and a composition having irregularly structured resin particles is obtained. When the amount exceeds 30 parts by weight, stable resin properties cannot be obtained, and the resulting resin particles become nonuniform.

The particle size of the organo-modified metal oxide nanoparticle may be 10 to 300 nm.

The organo-modified metal oxide nanoparticle is a kind of photocatalyst, which maximizes a light reflecting effect and thus improves the degree of whiteness, thermal stability and weather resistance of the vinyl chloride resin composition.

The metal oxide nanoparticle may be titanium dioxide, zinc oxide, cadmium sulfide, tungsten trioxide, zirconium oxide, aluminum oxide, silicon oxide, and titanium dioxide is preferable. Titanium dioxide can be used semi-permanently since it does not undergo any change even upon exposure to light, it has higher oxidizing power than chlorine or ozone and thus has strong sterilizing power, and it has the ability to decompose organic products into carbon dioxide and water. Also, titanium dioxide is not harmful to humans so it can be used in window frames, paper, rubber, paint, plastics, cosmetics.

Among the aforementioned metal oxides, titanium dioxide can be classified into three categories depending on its crystal structure, and in general, the rutile structure and the anatase structure as shown in FIG. 1 are mainly used.

Since rutile crystals have much more densely arranged titanium atoms and oxygen atoms than anatase crystals, the rutile structure is slightly more stable against light and absorbs more light, particularly in the ultraviolet region (360 to 400 nm), thus protecting the polymer. Further, the rutile structure also has excellent stability against organic/inorganic acids, alkalis, gases. On the other hand, titanium dioxide with the anatase structure produces relatively more OH groups compared to the rutile structure and thus decomposes the resin in paint to cause a chalking phenomenon in which the film is blanched. Therefore, the anatase structure is inapplicable to the present invention.

The vinyl chloride resin composition may further contain 0.1 to 10 parts by weight of an acrylic monomer which is copolymerized with the vinyl chloride resin based on 100 parts by weight of the vinyl chloride polymer resin.

This acrylic monomer should be copolymerizable with the vinyl chloride resin and have carbon-carbon double bonds to facilitate chain transfer. The monomer should be of such a kind that can produce a polymer which has a glass transition temperature (Tg) of 100 to 250°C to ensure that the vinyl chloride resin composition has good processability.

The acrylic monomer may be a conventional acrylic monomer, and in particular, the monomers of the following Formulae 1 and 2 may be used:

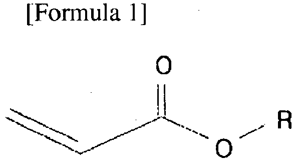

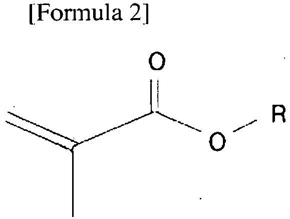

In Formula 1 and Formula 2, R is hydrogen, a linear or branched alkyl having 1 to 20 carbon atoms, preferably 1 to 4 carbon atoms, an aryl having 3 to 16 carbon atoms, or a cycloalkyl having 5 to 8 carbon atoms.

Specifically, the acrylic monomer may be methyl (meth)acrylate, ethyl (meth)acrylate, n-butyl (meth)acrylate, isobutyl acrylate, cyclohexyl acrylate, glycidyl (meth)acrylate, phenyl (meth)acrylate, methoxyethyl acrylate, methyl-2-cyanoacrylate, benzyl (meth)acrylate, allyl-2-cyanoacrylate, or 1-ethylpropyl-2-cyanoacrylate.

The amount of the acrylic monomer is determined such that the characteristic particulate form of the vinyl chloride resin is maintained so as to ensure the intrinsic properties of molded articles made of the resin, such as tensile strength, surface strength, are not affected. The amount of the monomer may be 0.1 to 10 parts by weight based on 100 parts by weight of the vinyl chloride resin. If the amount of the monomer is within the above-mentioned range, successive reactions of hydrogen chloride, which is an initial product from decomposition deteriorating the thermal stability of the vinyl chloride resin, are inhibited, and thus a vinyl chloride resin with excellent thermal stability can be produced.

The vinyl chloride resin composition according to the present invention may be further processed according to the use if required, for example, by adding additives such as a thermal stabilizer, a lubricant, a processing aid, an antioxidant, or a photostabilizer.

Hereinafter, a method of preparing the vinyl chloride resin composition according to the present invention will now be described in detail.

The method of preparing the vinyl chloride resin composition according to the present invention includes: (a) preparing a polymerization feed mixture by mixing 100 parts by weight of a vinyl chloride monomer and 0.1 to 30 parts by weight of an organo-modified metal oxide nanoparticle; and (b) conducting suspension polymerization on the resulting mixture.

The vinyl chloride monomer can be one of the monomers described above.

The amount of the organo-modified metal oxide nanoparticle may be 0.1 to 30 parts by weight based on 100 parts by weight of the vinyl chloride monomer. When the amount is less than 0.1 parts by weight, the thermal stability of the vinyl chloride resin obtained by polymerization becomes poor, and a composition having irregularly structured resin particles is obtained. When the amount exceeds 30 parts by weight, the amount of a dispersant to be added during the polymerization reaction must be increased, which deteriorates polymerization stability and causes non-uniformity of the resin particles.

The metal oxide nanoparticle may be used in an organically modified sol state or in a powder state.

Conventionally, titanium dioxide is used as a white pigment additive during the processing of vinyl chloride resins. However, the organo-modified metal oxide nanoparticle is introduced together with the vinyl chloride monomer prior to the initiation of polymerization, which will be described later. By introducing the metal oxide nanoparticle immediately prior to the polymerization, the rate of polymerization in the reactor can be suppressed, and scales may be formed during the polymerization process. Therefore, in order to more efficiently carry out the reaction, the metal oxide nanoparticle can be used in an organically modified sol state.

Therefore, the method of preparing the vinyl chloride resin composition further includes organically modifying the metal oxide nanoparticle.

When organically modifying the metal oxide nanoparticle, the metal oxide nanoparticle may be mixed with an organic substance for organic modification at a ratio of 1:1 to 1:4. When the proportion of the metal oxide nanoparticle is excessively high during the organic modification, viscosity is too high, and the metal oxide nanoparticles are not uniformly dispersed in the organic substance, and thus solid particles exist in intact form. In this case, the solid particles cannot penetrate the vinyl chloride monomer droplets and thus remain in the aqueous solution phase. On the other hand, when the proportion of the organic substance is excessively high, its influence on the reaction conditions such as pH, protective colloid properties, becomes significant.

Organic modification of the metal oxide nanoparticle is carried out by using an organic substance selected from the group consisting of methyl cellulose, hydroxypropylmethylcellulose, hydroxyethylmethylcellulose, an alkyl-or arylcarboxylic acid compound having 6 to 18 carbon atoms, or an alkyl- or arylphosphoric acid compound having 6 to 18 carbon atoms.

In particular, the cellulose-based dispersant may be used in a 0.5 to 15 wt% solution, and preferably, in a 1 to 7 wt% solution. At a dilute concentration of 0.5 wt% or lower, it is difficult for the metal oxide nanoparticles to be sufficiently dispersed, and thus efficiency is lowered. At a high concentration exceeding 15 wt%, viscosity of the solution is too high, and when the dispersant is introduced, the high viscosity would cause inconvenience in the modification process. Further, in addition to increasing the dispersion of the metal oxide nanoparticles, the dispersants significantly affect the vinyl chloride monomer droplets, and particles are formed in an unstable form.

The compounds used in the organic modification of the metal oxide nanoparticle is advantageous in that they do not significantly affect pH during the reaction and has both a hydrophilic group and a hydrophobic group, thus having excellent affinity to the suspension or emulsion, which is a reaction medium, and to the vinyl chloride monomer. The compounds also evenly disperse the metal oxide nanoparticles and easily participate in the reaction with the vinyl chloride monomer in the reaction medium, thus not forming scales on the inner walls of the reactor and the stirrer after the reaction.

The present invention also provides a method of preparing vinyl chloride resin by suspension polymerization using the above-described components. In this method, the organo-modified metal oxide nanoparticle is introduced at the beginning of the reaction. Here, both the vinyl chloride monomer and the organo-modified metal oxide nanoparticle are polar, and thus, after the reaction is initiated, the organo-modified metal oxide nanoparticle penetrates into the vinyl chloride monomer droplets to react. Furthermore, when an acrylic monomer is further used for the reaction, a copolymerization reaction will occur between a composite of the vinyl chloride monomer and the organo-modified metal oxide nanoparticle, and the acrylic monomer.

As described above, the organo-modified metal oxide nanoparticle forms a composite with the vinyl chloride monomer for polymerization, and this composite significantly improves the thermal stability and weather resistance of the vinyl chloride resin. These properties have been considered a weak point of vinyl chloride resins, but with these properties, the vinyl chloride resin can be advantageously used in exterior construction materials for siding, window frames, fencers.

Hereinafter, the present invention will be described in more detail with reference to the following examples, which are for illustrative purposes only, and not intended to limit the scope of the invention.

### Mode for Invention

### Example 1

180 parts by weight of deionized water, 1 part by weight of titanium dioxide nanoparticle which was organically modified with 0.5 parts by weight of oleic acid, 0.25 parts by weight of methyl methacrylate monomer, 0.07 parts by weight of t-butylperoxy-neodecanoate (BND) as a reaction initiator, and 0.3 parts by weight of polyvinyl alcohol-based dispersant were simultaneously introduced to a 40-L high pressure reactor. Next, the reactor was subjected to a vacuum, and 100 parts by weight of vinyl chloride were introduced while stirring. Polymerization was carried out at an elevated temperature of 58 ° C. When the reactor pressure reached 7 kg/cm², the reactor was cooled, and the unreacted vinyl chloride monomer was recovered and removed. Subsequently, the product was dehydrated and dried to provide a vinyl chloride resin.

### Example 2

A vinyl chloride resin was prepared in the same manner as in Example 1, except that 0.03 parts by weight of a 5% aqueous solution of hydroxypropylmethylcellulose dispersant were used instead of the oleic acid.

### Example 3

180 parts by weight of deionized water, 1 part by weight of powdered titanium dioxide, 0.25 parts by weight of methyl methacrylate monomer, 0.07 parts by weight of t-butylperoxy-neodecanoate (BND) as a reaction initiator, and 0.3 parts by weight of polyvinyl alcohol dispersant were simultaneously introduced into a 40-L high pressure reactor. Next, the reactor was subjected to a vacuum, and 100 parts by weight of vinyl chloride were introduced while stirring. Polymerization was carried out at an elevated temperature of 58 °C. When the reactor pressure reached 7 kg/cm², the reactor was cooled, and the unreacted vinyl chloride monomer was recovered and removed. Subsequently, the product was dehydrated and dried to provide a vinyl chloride resin.

### Example 4

A vinyl chloride resin was prepared in the same manner as in Example 1, except that 1 part by weight of the methyl methacrylate monomer was used.

### Example 5

180 parts by weight of deionized water, 4 parts by weight of titanium dioxide nanoparticle which was organically modified with 0.03 parts by weight of a 5% aqueous solution of hydroxypropylmethylcellulose dispersant, 0.25 parts by weight of a methyl methacrylate monomer, 0.07 parts by weight of t-butylperoxy-neodecanoate (BND) as a reaction initiator, and 0.3 parts by weight of polyvinyl alcohol-based dispersant were simultaneously introduced into a 40-L high pressure reactor. Next, the reactor was subjected to a vacuum, and 100 parts by weight of vinyl chloride were introduced while stirring. Polymerization was carried out at an elevated temperature of 58 °C. When the reactor pressure reached 7 kg/cm², the reactor was cooled, and the unreacted vinyl chloride monomer was recovered and removed. Subsequently, the product was dehydrated and dried to provide a vinyl chloride resin.

### Example 6

180 parts by weight of deionized water, 1 part by weight of titanium dioxide nanoparticle which was organically modified with 0.03 parts by weight of a 5% aqueous solution of hydroxypropylmethylcellulose dispersant, 0.25 parts by weight of methyl methacrylate monomer, and 0.07 part by weight of t-butylperoxy-neodecanoate (BND) as a reaction initiator were simultaneously introduced into a 40-L high pressure reactor. Next, the reactor was subjected to a vacuum, 100 parts by weight of vinyl chloride were introduced while stirring, and the stirring was continued for one hour at room temperature. Then, 0.3 parts by weight of a polyvinyl alcohol-based dispersant were added to the result, and subsequently stirring was performed for 30 minutes at room temperature. Polymerization was carried out at an elevated temperature of 58 C. When the reactor pressure reached 7 kg/cm², the reactor was cooled, and the unreacted vinyl chloride monomer was recovered and removed. Subsequently, the product was dehydrated and dried to provide a vinyl chloride resin.

### Example 7

180 parts by weight of deionized water, 1 part by weight of titanium dioxide nanoparticle which was organically modified with 0.03 parts by weight of a 5% aqueous solution of hydroxypropylmethylcellulose dispersant, and 0.07 parts by weight of t-butylperoxy-neodecanoate (BND) as a reaction initiator were simultaneously introduced into a 40-L high pressure reactor. Next, the reactor was subjected to a vacuum, 100 parts by weight of vinyl chloride were introduced while stirring, and the stirring was continued for one hour at room temperature. Then, 0.3 parts by weight of a polyvinyl alcohol-based dispersant and 0.25 parts by weight of a methyl methacrylate monomer were added to the result, and subsequently stirring was performed for 30 minutes at room temperature. Polymerization was carried out at an elevated temperature of 58 °C. When the reactor pressure reached 7 kg/cm², the reactor was cooled, and the unreacted vinyl chloride monomer was recovered and removed. Subsequently, the product was dehydrated and dried to provide a vinyl chloride resin.

### Comparative Example 1

180 parts by weight of deionized water, 0.07 parts by weight of t-butylperoxy-neodecanoate (BND) as a reaction initiator, and 0.3 parts by weight of a polyvinyl alcohol-based dispersant having a degree of saponification of 70 to 90 mol% were simultaneously introduced into a 40-L high pressure reactor. Next, the reactor was subjected to a vacuum, and 100 parts by weight of vinyl chloride were introduced while stirring. Polymerization was carried out at an elevated temperature of 58°C. When the reactor pressure reached 7 kg/cm², the reactor was cooled, and the unreacted vinyl chloride monomer was recovered and removed. Subsequently, the product was dehydrated and dried to provide a vinyl chloride resin.

### Comparative Example 2

A vinyl chloride resin was prepared in the same manner as in Comparative Example 1, except that 1 part by weight of titanium dioxide was further added just before elevating the temperature to 58 °C.

### Comparative Example 3

A vinyl chloride resin was prepared in the same manner as in Comparative Example 1, except that 1 part by weight of titanium dioxide, based on 100 parts by weight of the vinyl chloride resin, was further added to the vinyl chloride resin obtained in Comparative Example 1 during the processing and mixing.

The properties of each of the vinyl chloride resins prepared in Examples 1 through 7 and Comparative Examples 1 through 3 above were measured as follows.

### (A) Thermal stability (Measurement of thermal degradation temperature)

After calibrating a thermogravimetric analyzer (TGA), 10.0 ± 0.5 mg of each of the vinyl chloride resins prepared in Examples 1 through 7 and Comparative Examples 1 and 2 was weighed, and the thermal degradation temperature in a nitrogen atmosphere under the conditions indicated in Table 1 below was measured. The results are presented in Table 2.

**TABLE 1**

| Stage | Start (°C) | End (°C) | Rate (°C/min) | Hold (min) | Gas 1 |
|---|---|---|---|---|---|
| Stage 1 | 30 | 50 | 20 | 5 | On |
| Stage 2 | 150 | 500 | 10 | 0 | On |

**TABLE 2**

| | | Example | | | | | | | Comparative Example | |
|---|---|---|---|---|---|---|---|---|---|---|
| | | 1 | 2 | 3 | 4 | 5 | 6 | 7 | 1 | 2 |
| Weight degradation temperature (°C) | 5% | 274 | 271 | 268 | 274 | 272 | 274 | 274 | 266 | 266 |
| | 30% | 295 | 310 | 290 | 306 | 308 | 311 | 310 | 288 | 288 |

### (B) Thermal stability during processing (measurement of HAAKE thermal degradation time)

Each of the vinyl chloride resins prepared in Examples 1 through 7 and Comparative Examples 1 through 3 was introduced into a mixer with the below-described mixing composition and kneaded for 3 minutes. The thermal degradation time of the mixture was measured in a HAAKE mixer. The results are presented in Table 3 below. Here, the measurement conditions for the HAAKE mixer were set to a temperature of 190°C and a screw rotation speed of 40 rpm.

Mixing composition: 100 parts by weight of vinyl chloride (copolymer) resin, 5 parts by weight of a composite stabilizer, 6 parts by weight of an impact modifier, 5 parts by weight of calcium carbonate, and 4 parts by weight of titanium dioxide.

**TABLE 3**

| | | Example | | | | | | | Comparative Example | | | |
|---|---|---|---|---|---|---|---|---|---|---|---|---|
| | | 1 | 2 | 3 | 4 | 5 | 6 | 7 | 1 | 2 | 3 | |
| Thermal stability during processing | Torque (N m) | 20 | 21 | 22 | 20 | 19 | 17 | 18 | 21 | 21 | 22 | |
| | Thermal degradation time (sec ) | 1780 | 1832 | 1606 | 1821 | 1846 | 1893 | 1714 | 1644 | 1644 | 1520 | |

### (C) Whiteness and weather resistance

A mixture comprising 100 parts by weight of each of the vinyl chloride resins prepared in Examples 1 through 7 and Comparative Examples 1 through 3, 5 parts by weight of a composite stabilizer, 6 parts by weight of an impact modifier, 5 parts by weight of calcium carbonate, and 4 parts by weight of titanium dioxide was introduced into a mixer and kneaded for 3 minutes. The mixture was then introduced into a HAAKE extruder and extruded at 160, 165, 170, 180 and 190°C to obtain two 3 mm-thick specimen plates. One of these specimens was used in the measurement of whiteness and yellowness, and the other was used in the measurement of weather resistance by being exposed to a UV lamp for 100 hours. The results are presented in Table 4 below.

**TABLE 4**

| | | Example | | | | | | | Comparative Example | | | |
|---|---|---|---|---|---|---|---|---|---|---|---|---|
| | | 1 | 2 | 3 | 4 | 5 | 6 | 7 | 1 | 2 | 3 | |
| Initial | Whiteness | 72.6 | 74.7 | 68.7 | 74.8 | 74.4 | 74.8 | 75.2 | 65.2 | 70.3 | 68.1 | |
| | Yellowness | 1.2 | 1.3 | 2.6 | 1 | 1.4 | 1.2 | 1.6 | 4.2 | 2.2 | 2.8 | |
| After weather resistance test | Whiteness | 70.3 | 69.7 | 65.2 | 68.9 | 69.9 | 70 | 70.1 | 59.2 | 67.1 | 62.4 | |
| | Yellowness | 3.0 | 3.3 | 5.6 | 3.6 | 3.1 | 3 | 2.9 | 10.4 | 3.2 | 9.2 | |

From the results in Tables 2 through 4, it was confirmed that the vinyl chloride resins of Examples 1 through 7 prepared according to the present invention had superior thermal stability, both during processing and in their final products, as well as superior whiteness and weather resistance, when compared with the vinyl chloride resins of Comparative Examples 1 through 3.

## Claims

1. A vinyl chloride resin composition comprising: 100 parts by weight of a vinyl chloride polymer resin; and 0.1 to 30 parts by weight of an organo-modified metal oxide nanoparticle, wherein the organo-modified metal oxide nanoparticle is organically modified using at least one organic substance selected from the group consisting of methylcellulose, hydroxypropylmethylcellulose, hydroxyethylmethylcellulose, an arylcarboxylic acid compound having 6 to 18 carbon atoms, and an alkyl- or arylphosphoric acid compound having 6 to 18 carbon atoms.

2. The vinyl chloride resin composition of claim 1, wherein the metal oxide of the organo-modified metal oxide nanoparticle comprises at least one selected from the group consisting of titanium dioxide, zinc oxide, cadmium sulfide, tungsten trioxide, zirconium oxide, aluminum oxide, and silicon oxide.

3. The vinyl chloride resin composition of claim 1, wherein the average particle size of the organo-modified metal oxide nanoparticle is 10 to 300 nm.

4. The vinyl chloride resin composition of claim 1, further comprising 0.1 to 10 parts by weight of an acrylic resin copolymerized with the 100 parts by weight of the vinyl chloride polymer resin.

5. The vinyl chloride resin composition of claim 4, having a glass transition temperature (Tg) of 100 to 250°C.

6. The vinyl chloride resin composition of claim 1, further comprising at least one additive selected from the group consisting of a thermal stabilizer, a lubricant, a processing aid, an antioxidant, and a photostabilizer.

7. A method of preparing a vinyl chloride resin composition comprising: preparing the organo-modified metal oxide nanoparticulate metal oxide with at least one organic substance selected from the group consisting of methylcellulose, hydroxypropylmethylcellulose, hydroxyethylmethylcellulose, an alkyl- or arylcarboxylic acid compound having 6 to 18 carbon atoms, and an alkyl- or arylphosphoric acid compound having 6 to 18 carbon atoms; preparing a polymerization feed mixture by mixing 100 parts by weight of a vinyl chloride monomer and 0.1 to 30 parts by weight of the organo-modified metal oxide nanoparticle; and conducting suspension polymerization on the resulting mixture.

8. The method of claim 7, wherein the organo-modified metal oxide nanoparticle is used in a sol state or in a powder state.

9. The method of claim 7, wherein the cellulose-based dispersant is used in a 0.5 to 15 wt % solution.

10. The method of claim 7, wherein, during the organic modification of the metal oxide nanoparticle, the nanoparticulate metal oxide is reacted with the organic substance in a ratio of 1:1 to 1:4.

11. The method of claim 7, wherein the polymerization feed mixture further contains 0.1 to 10 parts by weight of an acrylic monomer.

12. The method of claim 11, wherein the acrylic monomer is a compound represented by Formula 1 or Formula 2 below: 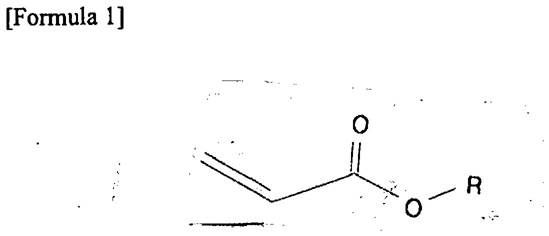 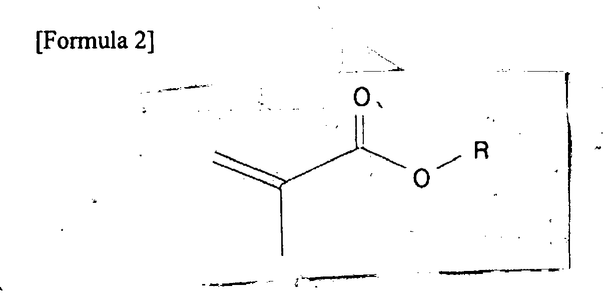 where R is hydrogen, a linear or branched alkyl having 1 to 20 carbon atoms, an aryl having 3 to 16 carbon atoms, or a cycloalkyl having 5 to 8 carbon atoms.

13. The method of claim 11, wherein the acrylic monomer includes at least one monomer selected from the group consisting of methyl (meth)acrylate, ethyl (meth)acrylate, n-butyl (meth)acrylate, isobutyl acrylate, cyclohexyl acrylate, glycidyl (meth)acrylate, phenyl (meth)acrylate, methoxyethyl acrylate, methyl-2-cyanoacrylate, benzyl (meth)acrylate, allyl-2-cyanoacrylate, and 1-ethylpropyl-2-cyanoacrylate.

## Patentansprüche

1. Vinylchloridharzzusammensetzung, umfassend: 100 Gewichtsteile eines Vinylchloridpolymerharzes; und 0,1-30 Gewichtsteile eines organisch modifzierten Metalloxidnanopartikels, wobei der organisch modifzierte Metalloxidnanopartikel unter Verwendung zumindest einer organischen Verbindung, ausgewählt aus der Gruppe, bestehend aus Methylcellulose, Hydroxypropylmethylcellulose, Hydroxyethylmethylcellulose, einer Arylcarbonsäureverbindung, die 6-18 Kohlenstoffatome hat, und einer Alkyl- oder Arylphosphorsäureverbindung, die 6-18 Kohlenstoffatome hat, organisch modifiziert ist.

2. Vinylchloridharzzusammensetzung nach Anspruch 1, wobei das Metalloxid des organisch modifizierten Metalloxidnanopartikels zumindest eines, ausgewählt aus der Gruppe, bestehend aus Titandioxid, Zinkoxid, Cadmiumsulfid, Wolframtrioxid, Zirkoniumoxid, Aluminiumoxid und Siliziumoxid, umfasst.

3. Vinylchloridharzzusammensetzung nach Anspruch 1, wobei die durchschnittliche Partikelgröße des organisch modifizierten Metalloxidnanopartikels 10-300 nm ist.

4. Vinylchloridharzzusammensetzung nach Anspruch 1, die ferner 0,1-10 Gewichtsteile eines acrylischen Harzes umfasst, das mit den 100 Gewichtsteilen des Vinylchloridpolymerharzes copolymierisiert ist.

5. Vinylchloridharzzusammensetzung nach Anspruch 4, die eine Glasübergangstemperatur (Tg) von 100 bis 250°C hat.

6. Vinylchloridharzzusammensetzung nach Anspruch 1, die ferner zumindest ein Additiv, ausgewählt aus der Gruppe, bestehend aus einem thermischen Stabilisator, einem Schmiermittel, einem Verarbeitungshilfsmittel, einem Antioxidationsmittel und einem Photostabilisator, umfasst.

7. Verfahren zur Herstellung einer Vinylchloridharzzusammensetzung, umfassend: Herstellen des organisch modifizierten Metalloxids nanopartikuläres Metalloxid mit zumindest einer organischen Verbindung, ausgewählt aus der Gruppe, bestehend aus Methylcellulose, Hydroxypropylmethylcellulose, Hydroxyethylmethylcellulose, einer Alkyl- oder Arylcarbonsäureverbindung, die 6-18 Kohlenstoffatome hat, und einer Alkyl- oder Arylphosphorsäureverbindung, die 6-18 Kohlenstoffatome hat; Herstellen eines Zulaufgemischs zur Polymerisation durch Mischen von 100 Gewichtsteilen eines Vinylchloridmonomers und 0,1-30 Gewichtsteilen des organisch modifizierten Metalloxidnanopartikels; und Durchführen einer Suspensionspolymerisation mit dem resultierenden Gemisch.

8. Verfahren nach Anspruch 7, wobei der organisch modifizierte Metalloxidnanopartikel in einem Sol-Zustand oder in einem Pulverzustand verwendet wird.

9. Verfahren nach Anspruch 7, wobei das Cellulose-basierte Dispersionsmittel in einer Menge von 0,5-15 Gew.-%-Lösung verwendet wird.

10. Verfahren nach Anspruch 7, wobei während des organischen Modifizierens des Metalloxidnanopartikels das nanopartikuläre Metalloxid mit einer organischen Verbindung in einem Verhältnis von 1:1 bis 1:4 reagiert wird.

11. Verfahren nach Anspruch 7, wobei das Zulaufgemisch zur Polymerisation ferner 0,1-10 Gewichtsteile eines acrylischen Monomers enthält.

12. Verfahren nach Anspruch 11, wobei das acrylische Monomer eine Verbindung ist, die durch die Formel 1 oder Formel 2, wie im Folgenden angegeben, dargestellt ist: 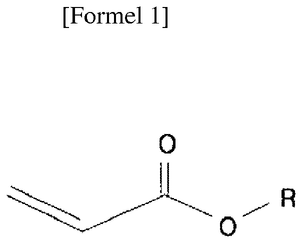 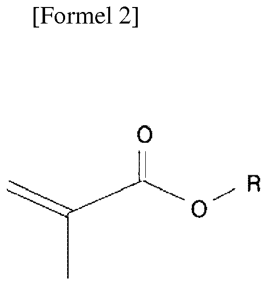 wobei R Wasserstoff, ein lineares oder verzweigtes Alkyl, das 1 bis 20 Kohlenstoffatome hat, ein Aryl, das 3 bis 16 Kohlenstoffatome hat, oder ein Cycloalkyl, das 5 bis 8 Kohlenstoffatome hat, ist.

13. Verfahren nach Anspruch 11, wobei das acrylische Monomer zumindest ein Monomer, ausgewählt aus der Gruppe, bestehend aus Methyl(meth)acrylat, Ethyl(meth)acrylat, n-Butyl(meth)acrylat, Isobutylacrylat, Cyclohexylacrylat, Glycidyl(meth)acrylat, Phenyl(meth)acrylat, Methoxyethylacrylat, Methyl-2-cyanoacrylat, Benzyl(meth)acrylat, Allyl-2-cyanoacrylat und 1-Ethylpropyl-2-cyanoacrylat, umfasst.

## Revendications

1. Composition de résine de chlorure de vinyle comprenant : 100 parties en poids d'une résine polymère de chlorure de vinyle ; et 0,1 à 30 parties en poids d'une nanoparticule d'oxyde de métal organomodifiée, laquelle nanoparticule est organiquement modifiée en utilisant au moins une substance organique sélectionnée parmi le groupe constitué de méthylcellulose, d'hydroxypropylméthylcellulose, d'hydroxyéthylméthylcellulose, d'un composé d'acide arylcarboxylique portant 6 à 18 atomes de carbone et d'un composé d'acide alkyl- ou arylphosphorique portant 6 à 18 atomes de carbone.

2. Composition de résine de chlorure de vinyle selon la revendication 1, dans laquelle l'oxyde de métal de la nanoparticule d'oxyde de métal organomodifiée comprend au moins un composé sélectionné parmi le groupe constitué de dioxyde de titane, d'oxyde de zinc, de sulfure de cadmium, de dioxyde de tungstène, d'oxyde de zirconium, d'oxyde d'aluminium et d'oxyde de silicium.

3. Composition de résine de chlorure de vinyle selon la revendication 1, dans laquelle la taille moyenne des particules de la nanoparticule d'oxyde de métal organomodifiée est comprise entre 10 et 300 nm.

4. Composition de résine de chlorure de vinyle selon la revendication 1, comprenant en outre 0,1 à 10 parties en poids d'une résine acrylique copolymérisée avec les 100 parties en poids de la résine polymère de chlorure de vinyle.

5. Composition de résine de chlorure de vinyle selon la revendication 4, ayant une température de transition vitreuse (Tg) comprise entre 100 et 250 °C.

6. Composition de résine de chlorure de vinyle selon la revendication 1, comprenant en outre au moins un additif sélectionné parmi le groupe constitué d'un stabilisant thermique, d'un lubrifiant, d'un auxiliaire de traitement, d'un antioxydant et d'un photostabilisant.

7. Procédé de préparation d'une composition de résine de chlorure de vinyle comprenant les étapes consistant à : préparer l'oxyde de métal de la nanoparticule d'oxyde de métal organomodifiée avec au moins une substance organique sélectionnée parmi le groupe constitué de méthylcellulose, d'hydroxypropylméthylcellulose, d'hydroxyéthylméthylcellulose, d'un composé d'acide alkyl- ou arylcarboxylique portant 6 à 18 atomes de carbone et d'un composé d'acide alkyl- ou arylphosphorique portant 6 à 18 atomes de carbone ; préparer un mélange de charge d'alimentation de polymérisation en mélangeant 100 parties en poids d'un monomère de chlorure de vinyle et 0,1 à 30 parties en poids de la nanoparticule d'oxyde de métal organomodifiée ; et réaliser une polymérisation en suspension sur le mélange résultant.

8. Procédé selon la revendication 7, dans lequel la nanoparticule d'oxyde de métal organomodifiée est utilisée à l'état solide ou à l'état de poudre.

9. Procédé selon la revendication 7, dans lequel le dispersant à base de cellulose est utilisé dans une solution de 0,5 à 15 % en poids.

10. Procédé selon la revendication 7, dans lequel durant la modification organique de la nanoparticule d'oxyde de métal, on fait réagir l'oxyde de métal de la nanoparticule avec la substance organique selon un rapport de 1 :1 à 1 :4.

11. Procédé selon la revendication 7, dans lequel le mélange de charge d'alimentation de polymérisation contient en outre 0,1 à 10 parties en poids d'un monomère acrylique.

12. Procédé selon la revendication 11, dans lequel le monomère acrylique est un composé représenté par la Formule 1 ou la Formule 2 ci-dessous : 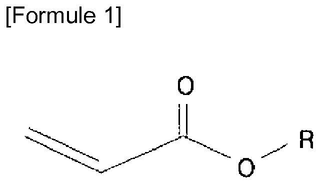 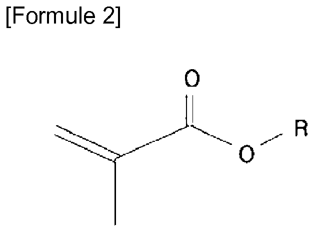 dans lesquelles E représente l'hydrogène, un alkyle linéaire ou ramifié portant 1 à 20 atomes de carbone, un aryle portant 3 à 16 atomes de carbone ou un cycloalkyle portant 5 à 8 atomes de carbone.

13. Procédé selon la revendication 11, dans lequel le monomère acrylique renferme au moins un monomère sélectionné parmi le groupe constitué de (méth)acrylate de méthyle, de (méth)acrylate d'éthyle, de (méth)acrylate de n-butyle, d'acrylate d'isobutyle, d'acrylate de cyclohexyl, de (méth)acrylate de glycidyle, de (méth)acrylate de phényle, d'acrylate de méthoxyéthyle, de méthyl-2-cyanoacrylate, de (méth)acrylate de benzyle, d'allyl-2-cyanoacrylate et de 1-éthylpropyl-2-cyanoacrylate.
